# EUROPÄISCHE PATENTANMELDUNG

(11) **EP 2 236 711 A2**
(43) Veröffentlichungstag der Anmeldung: **06.10.2010**
(21) Anmeldenummer: 10155904.5
(22) Anmeldetag: 09.03.2010
(51) Int. Cl.: E05C 1/06, E05B 63/04

(54) **Bordwandverschluss an einem Nutzfahrzeugaufbau**

(30) Priorität: 20.03.2009 DE 202009001986 U
(71) Anmelder: F. Hesterberg & Söhne GmbH & Co. KG, 58256 Ennepetal (DE)
(72) Erfinder: Tiedtke, Henning, 58256 Ennepetal (DE); Klein, Claus Jürgen, 58332 Schwelm (DE)
(74) Vertreter: Christophersen & Partner

(57) **Zusammenfassung**

Vorgeschlagen wird ein Bordwandverschluss an einem Nutzfahrzeugaufbau, mit einer vertikal an dem Aufbau angeordneten Runge (2, 3, 4), mindestens einer um eine horizontale Achse (6) nach unten abklappbaren Bordwand (5) mit einer im Schließzustand gegen die Runge (2, 3, 4) verriegelbaren Bordwandeinfassung (7, 7a), und einem in der Runge (2) oder der Bordwandeinfassung (7) angeordneten Riegelmechanismus (11). Dieser weist einen beweglich gelagerten Riegel (15) auf, der formschlüssig mit einem an der Bordwandeinfassung (7) bzw. der Runge (2) angebrachten Bordwandhalter verbindbar ist. Zur Erzielung einer reduzierten Typenvielfalt der für solche Bordwandverschlüsse benötigten Bauteile weist der Riegel (15) einen ersten (31) und einen zweiten (32) Riegelabschnitt auf, und die beiden Riegelabschnitte (31, 32) sind bezüglich der Längsmittelachse (33) des Riegels (15) symmetrisch angeordnet und gestaltet, und im Schließzustand tritt nur einer der beiden Riegelabschnitte (31, 32) in Formschluss mit dem Bordwandhalter.

## Beschreibung

Die Erfindung betrifft einen Bordwandverschluss an einem Nutzfahrzeugaufbau, mit einer vertikal an dem Aufbau angeordneten Runge, mindestens einer um eine horizontale Achse nach unten abklappbaren Bordwand mit einer im Schließzustand gegen die Runge verriegelbaren Bordwandeinfassung, und einem in der Runge oder der Bordwandeinfassung angeordneten Riegelmechanismus mit einem beweglich gelagerten Riegel, der formschlüssig mit einem an der Bordwandeinfassung bzw. der Runge angebrachten Bordwandhalter verbindbar ist.

Für das Verriegeln abklappbarer Bordwände an der jeweils angrenzenden Runge eines Nutzfahrzeugaufbaus bestehen prinzipiell zwei Möglichkeiten. Entweder befindet sich der Riegelmechanismus an der Runge und entsprechend der starre Bordwandhalter an der Bordwand, oder aber der Bordwandhalter ist an der Runge befestigt und der Riegelmechanismus an der Bordwand, z. B. an der Einfassung, welche die Bordwand zu der Runge hin abschließt. Beide Möglichkeiten kommen in der Praxis vielfach zum Einsatz.

Von Nachteil ist, dass der häufig als eine eigenständige Baueinheit gestaltete Riegelmechanismus in Abhängigkeit von der jeweiligen Einbausituation gestaltet sein muss. So müssen im Falle in die Bordwand integrierter Riegel diese an den beiden Enden der Bordwand unterschiedlich gestaltet sein, d. h. einmal auf Linksanschlag ausgelegt, und einmal auf Rechtsanschlag. Dasselbe Problem besteht in Bezug auf die unterschiedlichen Seiten des Nutzfahrzeugaufbaus. Denn ist der Riegel in die Runge integriert, so ist für die linke Fahrzeugseite ein anderer Riegelmechanismus als für die rechte Fahrzeugseite erforderlich. Dies gilt insbesondere dann, wenn die beiden vorderen Eckrungen des Nutzfahrzeugaufbaus den Riegelmechanismus für die dort anschlagenden seitlichen Bordwände aufweisen.

Mit der Erfindung angestrebt wird daher eine reduzierte Typenvielfalt der für Bordwandverschlüsse an Nutzfahrzeugaufbauten benötigten Bauteile.

Zur **Lösung** wird bei einer Bordwandverriegelung der eingangs genannten Art vorgeschlagen, dass der Riegel einen ersten und einen zweiten Riegelabschnitt aufweist, dass die beiden Riegelabschnitte bezüglich der Längsmittelachse des Riegels symmetrisch angeordnet und gestaltet sind, und dass im Schließzustand nur einer der beiden Riegelabschnitte in Formschluss mit dem Bordwandhalter tritt.

Ein solcher Bordwandverschluss ist in identischer, d. h. unveränderter Bauart bei unterschiedlichen Einbausituationen verwendbar. Der Riegelmechanismus kann so gestaltet sein, dass er sich ohne Änderung sowohl zur Verriegelung einer links wie einer rechts anschlagenden Bordwand einsetzen lässt. Ein einziger Bautyp eines Riegelmechanismus reicht aus, wo bisher zwei unterschiedliche Bautypen für einerseits Linksanschlag und andererseits Rechtsanschlag erforderlich waren. Von Vorteil ist der geringere Aufwand bei der Fertigung, aber auch im Vertrieb, etwa infolge der mit der Vereinheitlichung der Bordwandverschlüsse einhergehenden, geringeren Lagerhaltung. Zudem lassen sich im Reparaturfall die betroffenen Bauteile leicht austauschen.

In Bezug auf die Gestaltung des Riegels sind dessen erster und zweiter Riegelabschnitt vorzugsweise jeweils mit einer zur Bewegungsrichtung des Riegels schräg angeordneten Keilfläche versehen, wobei beide Keilflächen in einer gemeinsamen Ebene liegen.

Mit einer weiteren Ausgestaltung wird vorgeschlagen, dass der erste und der zweite Riegelabschnitt durch einen Freiraum voneinander getrennt sind, der sich vom freien Riegelende ausgehend nur über eine Teillänge der Länge des Riegels erstreckt. Im Schließzustand kommt es ausschließlich zwischen dem aktiven Riegelabschnitt und dem Bordwandhalter zu einem Formschluss, d. h. der Bordwandhalter umschlingt den aktiven Riegelabschnitt und tritt hierbei durch den zu dem anderen Riegelabschnitt bestehenden Freiraum hindurch.

Mit einer weiteren Ausgestaltung wird vorgeschlagen, dass die den Riegelmechanismus aufnehmende Runge bzw. Bordwandeinfassung aus einem Hohlprofil mit einer Innenbreite in Fahrzeugrichtung besteht, und dass sich der erste Riegelabschnitt nur auf der einen Hälfte der Innenbreite, und der zweite Riegelabschnitt nur auf der anderen Hälfte der Innenbreite befindet.

Mit einer weiteren Ausgestaltung wird vorgeschlagen, dass Bestandteil des Riegelmechanismus ein mit dem Riegel bewegungsgekoppelter Schwenkhebel ist, und dass der Schwenkhebel aus einer Öffnung in der nach fahrzeugaußen weisenden Wand des Hohlprofils herausschwenkbar ist.

Ausführungsbeispiele der Erfindung werden im Folgenden anhand der Zeichnungen erläutert. Darin zeigen:
- Fig. 1: eine Seitenansicht des Fahrzeugaufbaus eines Nutzfahrzeuges;
- Fig. 2: in perspektivischer Darstellung die vordere Eckrunge des Fahrzeugaufbaus einschließlich einer daran verriegelten Bordwand;
- Fig. 3: die Gegenstände nach Fig. 2, jedoch ohne die Bordwand;
- Fig. 4: in einer gemeinsamen perspektivischer Darstellung zwei verschiedene Profile für die linke bzw. die rechte vordere Eckrunge, sowie dazwischen einen als eigenständige Baueinheit gestalteten Riegelmechanismus zum wahlweisen Einsetzen in das eine oder das andere Profil;
- Fig. 5: den Riegelmechanismus aus Fig. 4 in vergrößerter Darstellung;
- Fig. 6: in einer Ansicht ausschließlich den Riegel des Riegelmechanismus;
- Fig. 7: in perspektivischer Darstellung eine der Mittelrungen des Fahrzeugaufbaus, die als abklappbare Runge ausgeführt ist, einschließlich einer an der rechten Seite der Runge verriegelten Bordwandeinfassung, welche Bestandteil der angrenzenden Bordwand ist;
- Fig. 8: in einer gemeinsamen perspektivischen Darstellung zwei unterschiedliche Profile für die linke bzw. die rechte Bordwandeinfassung, sowie dazwischen ein als eigenständige Baueinheit gestalteter Riegelmechanismus zum wahlweisen Einsetzen in das eine oder das andere Profil;
- Fig. 9: eine Ansicht von außen auf die Bordwandeinfassung nach Fig. 7;
- Fig. 10: einen Schnitt entsprechend der Schnittebene X - X durch die Bordwandeinfassung und
- Fig. 11: in vergrößerter Darstellung ein Detail aus Fig. 10.

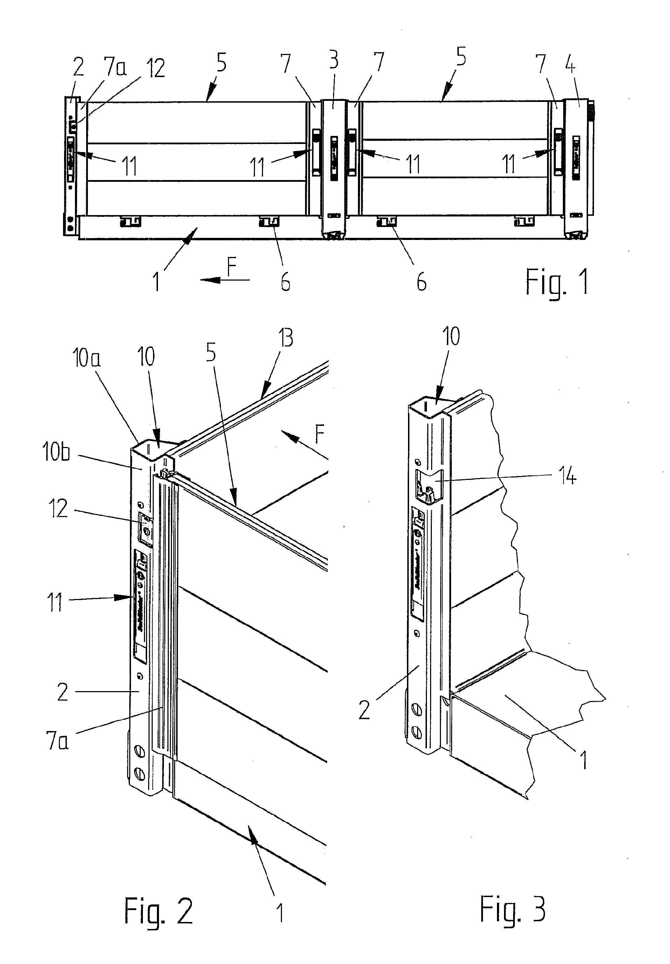

Die Fig. 1 zeigt in einer Seitenansicht von links den Nutzfahrzeugaufbau eines Lkw oder eines Lkw-Anhängers mit verschiedenen Bordwandverschlüssen. An dem Ladeboden 1 des Nutzfahrzeugaufbaus sind in Abständen zueinander Rungen 2, 3 und 4 befestigt, wobei die vordere Eckrunge 2 starr am Ladeboden 1 festgelegt ist, wohingegen die Mittelrunge 3 sowie die hintere Eckrunge 4 als klappbare Rungen ausgeführt sind, d. h. sie lassen sich aus einem seitlich am Ladeboden 1 befestigten Rungenhalter lösen und nach unten hin abklappen oder ganz entfernen. Die Rungen können nach oben fortgesetzt sein und z. B. einen Dachaufbau tragen. Die Öffnungen zwischen den Rungen 2, 3, 4 sind durch Bordwände 5 verschließbar. Jede Bordwand 5 ist über horizontal angeordnete Scharniere 6 am Ladeboden 1 befestigt, und lässt sich um die so gebildete Achse nach unten abklappen, um so den Ladeboden von der Seite her zugänglich zu machen.

Zum Verschließen der hochgeklappten Bordwände 5 an den Rungen 2, 3, 4 dient jeweils ein Riegelmechanismus 11 in Kombination mit einem Bordwandhalter 12. Der im Folgenden noch näher beschriebene Riegelmechanismus 11 kann sich entweder, wie dies bei der fest montierten vorderen Eckrunge 2 der Fall ist, in dieser Runge befinden.

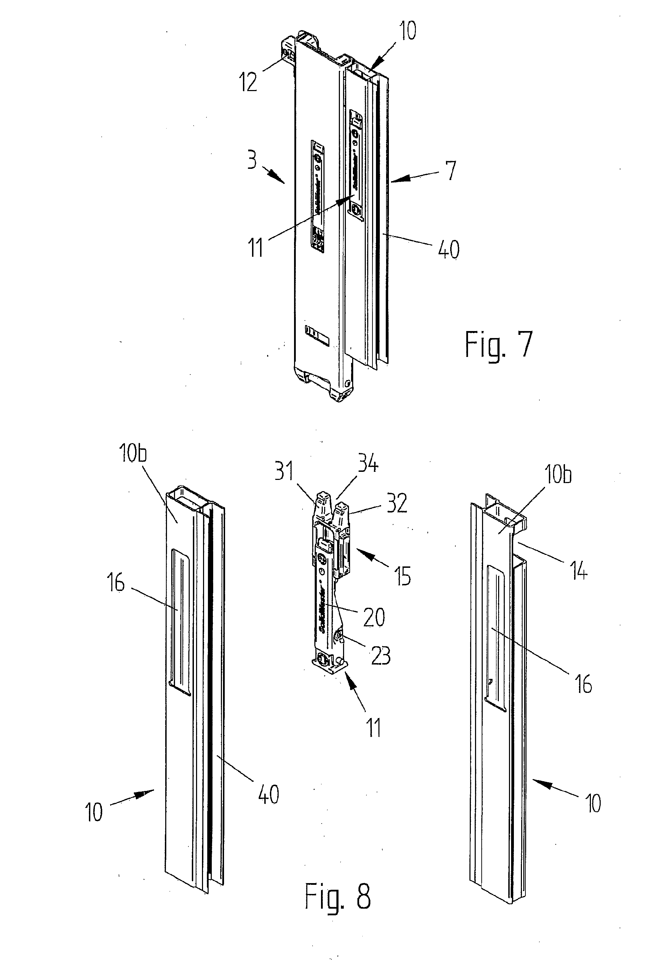

Oder aber der Riegelmechanismus 11 befindet sich, wie in den Fign. 7 bis 11 dargestellt, an der abklappbaren Bordwand 5. In diesem Fall ist die Bordwand 5 an ihrem Ende mit einer soweit vergrößerten, vertikalen Bordwandeinfassung 7 versehen, dass darin der Riegelmechanismus 11 Platz findet. Diese zweite Alternative eines Bordwandverschlusses ist in Fig. 1 an der Mittelrunge 3 sowie an beiden Seiten der hinteren Eckrunge 4 realisiert.

Anhand der Figuren 2 bis 6 wird der Bordwandverschluss im Bereich der Runge 2, d. h. der vorderen Eckrunge, erläutert. Die Runge 2 besteht im Wesentlichen aus einem Hohlprofil 10, welches hier einen geschlossenen Querschnitt mit einer in Fahrtrichtung F weisenden Wand 10a und einer zur Seite, d.h. nach fahrzeugaußen weisenden Wand 10b. Durch entsprechende Querschnittsgestaltung des Hohlprofils 10 bietet dieses eine Anlage sowohl für eine nicht bewegliche vordere Bordwand 13, als auch einen Anschlag für die zur Seite abklappbare Bordwand 5. Die Bordwand 5 ist mit einer sich vertikal erstreckenden, hier relativ schmal bauenden Einfassung 7a versehen, an der starr ein Bordwandhalter 12 befestigt ist.

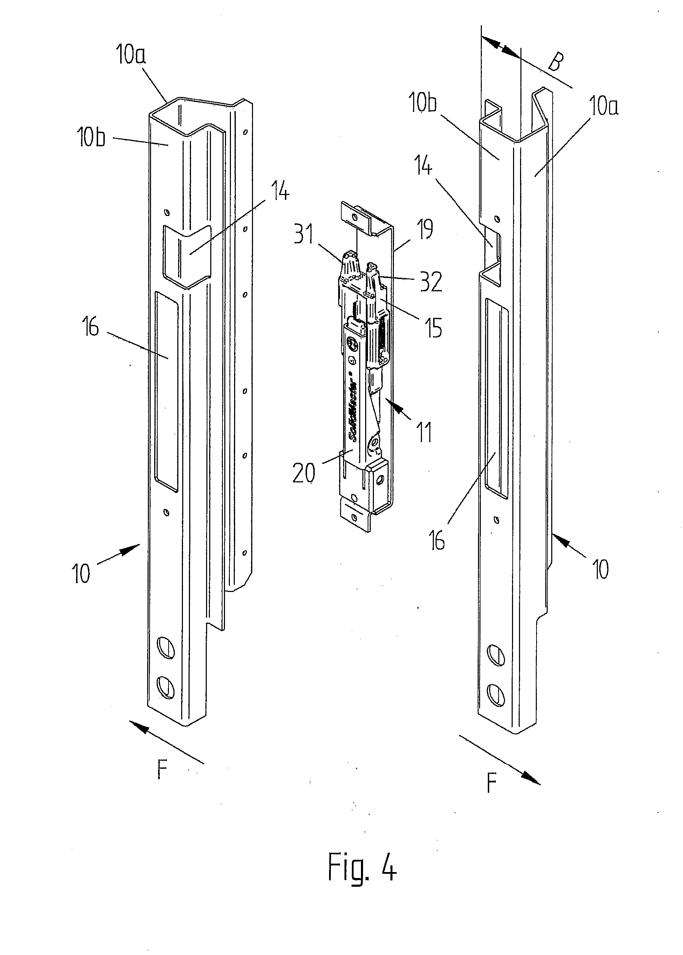

Der Bordwandhalter 12 ist als stabile Lasche oder Bügel gestaltet und findet, wie ein Vergleich der Figuren 2 und 3 zeigt, bei hochgeklappter Bordwand Platz in einer Ausnehmung 14 der Runge. Die Ausnehmung 14 erstreckt sich, wie Fig. 4 zeigt, über Eck. Sie beginnt etwa mittig auf der nach fahrzeugaußen weisenden Wand 10b, und reicht bis in jenen Wandabschnitt des Hohlprofils 10 hinein, welcher der Stirnfläche der Bordwand gegenüberliegt, und an welchem der Bordwandhalter 12 befestigt ist.

Das Hohlprofil 10 der Runge 2 ist in der nach fahrzeugaußen weisenden Wand 10b mit einer Öffnung 16 versehen. Die Öffnung 16 ist etwas tiefer als die über Eck reichende Ausnehmung 14 angeordnet und ermöglicht einen Zugriff auf den an der Rückseite der Öffnung 16 innerhalb des Hohlprofils 10 angeordneten Riegelmechanismus 11.

Zur Montage des Riegelmechanismus 11 innerhalb des Profils 10 wird der Riegelmechanismus in Längsrichtung in das Profil hineingeschoben und in einer solchen Höhe positioniert, dass ein von Hand ergreifbarer Schwenkhebel 20 des Riegelmechanismus aus der Öffnung 16 herausschwenkbar ist. Die Montage in dem Profil 10 wird dadurch erleichtert, dass der Riegelmechanismus 11 einschließlich des Schwenkhebels 20 als eine eigenständige Baueinheit auf einer Grundplatte 19 montiert ist, die in das Hohlprofil eingeschoben und dann von innen her an der nach fahrzeugaußen weisenden Wand 10a befestigt ist, vorzugsweise durch vernieten.

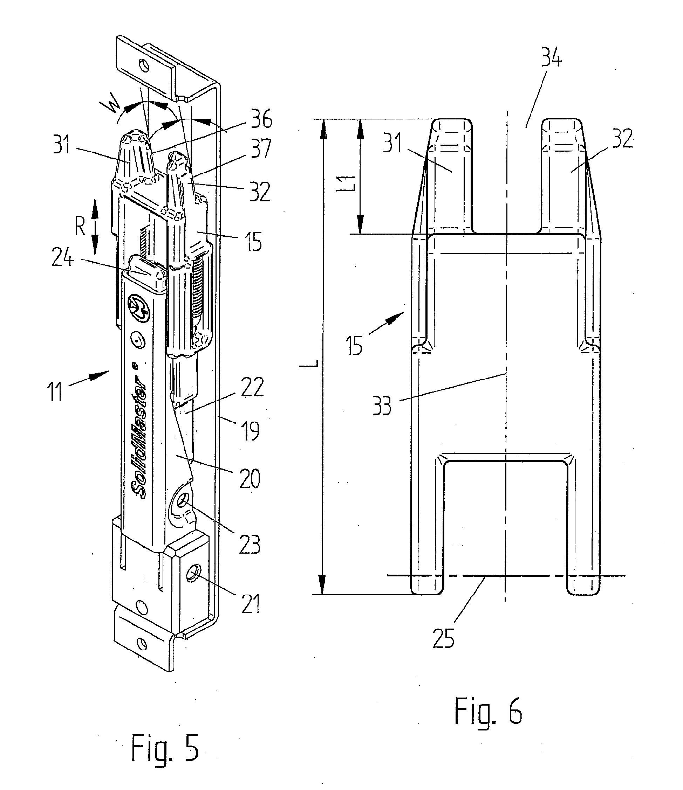

Die Figuren 5 und 6 zeigen Einzelheiten des Riegelmechanismus 11 und insbesondere den in Längsrichtung der Runge 2 beweglich gelagerten Riegel 15. Zur Betätigung des Riegels 15 ist der Schwenkhebel 20 auf einer ortsfesten Achse 21 gelagert. Über eine weitere Achse 23 ist der Schwenkhebel 20 gelenkig mit einem Kniehebel 22 verbunden, der seinerseits gelenkig mit dem Riegel 15 verbunden ist. Erreicht wird auf diese Weise eine Kinematik, bei der sich der vertikal geführte Riegel 15 beim nach außen Verschwenken des Schwenkhebels 20 nach unten absenkt und hierbei den Bordwandhalter 12 freigibt.

Umgekehrt zeigt Fig. 5 die Situation bei eingeklapptem Schwenkhebel 20, in welcher Situation der Riegel 15 seine höchste Position einnimmt, welche zugleich die Verriegelungsstellung ist. Um ein ungewolltes Wegschwenken des Schwenkhebels 20 nach außen zu verhindern, ist in den Schwenkhebel 20 eine Sicherungstaste 24 integriert, die zunächst betätigt werden muss, bevor der Schwenkhebel 20 dann um die Achse 21 nach außen gezogen werden kann.

Die Fig. 6 zeigt den Riegel 15 und bezeichnet auch das Gelenk 25 zu dem Kniehebel 22. Der Riegel ist ein einstückiges Formteil aus Metall oder Kunststoff und läuft an seinem oberen, freien Riegelende in einem ersten Riegelabschnitt 31 und einem zweiten Riegelabschnitt 32 aus. Bezüglich der Längsmittelachse 33 des Riegels 15 sind die beiden Riegelabschnitte 31, 32 symmetrisch angeordnet und gestaltet. Sie erstrecken sich parallel zueinander in Bewegungsrichtung des Riegels. Da jeder Riegelabschnitt 31, 32 wie ein Zapfen gestaltet ist, kann er zur Verriegelung der Bordwand in den als Lasche oder Bügel geformten Bordwandhalter 12 hineinfahren, und so die Bordwand formschlüssig arretieren. Um die Bordwand im Zuge der Verriegelung besser an die Runge heranzuziehen, sind der erste Riegelabschnitt 31 und der zweite Riegelabschnitt 32 jeweils mit einer zur Bewegungsrichtung R des Riegels 15 schräg angeordneten Keilfläche 36 bzw. 37 versehen. Beide Keilflächen 36, 37 liegen in derselben, d. h. in einer gemeinsamen Ebene, die unter einem Winkel W schräg zur Bewegungsrichtung R des Riegels angeordnet ist.

Erster 31 und zweiter 32 Riegelabschnitt sind zwar einstückig, da Teil desselben Riegels 15, sie sind jedoch durch einen Freiraum 34, durch den die Längsmittelachse 33 des Riegels verläuft, zueinander beabstandet. Der Freiraum 34 erstreckt sich vom freien Riegelende ausgehend über eine Teillänge L1 der Gesamtlänge L des Riegels. Auf diese Weise befindet sich der erste Riegelabschnitt 31 ausschließlich auf der einen Seite, und der zweite Riegelabschnitt 32 ausschließlich auf der anderen Seite der Längsmittelachse 33 des Riegels. Im Schließzustand kommt es ausschließlich zwischen dem jeweils "aktiven" Riegelabschnitt und dem Bordwandhalter 12 zu einem Formschluss, d. h. der vorzugsweise wie ein Bügel gestaltete Bordwandhalter 12 umschlingt den "aktiven" Riegelabschnitt, und führt hierbei durch den Freiraum 34 hindurch.

Der andere, das heißt nicht aktive Riegelabschnitt wird, ist der Bordwandverschluss erst einmal in dem Hohlprofil 10 montiert, nicht benötigt. Dieser Nachteil der gleichsamen Verdoppelung der Riegelabschnitte ist jedoch klein im Vergleich zu dem damit erzielbaren Vorteil. Denn wie Fig. 4 zeigt, lässt sich ein- und derselbe Riegelmechanismus 11 wahlweise in die links vorne am Nutzfahrzeugaufbau befestigte, in Fig. 4 links dargestellte Runge 2, oder in die rechts vorne am Nutzfahrzeugaufbau befestigte, in Fig. 4 rechts dargestellte Runge einsetzen.

Wird der Riegelmechanismus in der linken Runge in Fig. 4 montiert, kann nur der zweite Riegelabschnitt 32 in die Ausnehmung 14 einfahren und dabei den darin befindlichen Bordwandhalter 12 blockieren. Umgekehrt vermag, wird der Riegelmechanismus in der rechten Runge montiert, nur der erste Riegelabschnitt 31 in die dortige Ausnehmung 14 einzufahren und den darin befindlichen Bordwandhalter 12 zu blockieren. In beiden Fällen befindet sich der jeweils nicht aktive Riegelabschnitt 31 bzw. 32 neben der über Eck geführten Ausnehmung 14, wo er funktionslos ist und nach außen hin durch die Wand 10b des Hohlprofils abgedeckt ist. Im Ergebnis eignet sich daher ein- und derselbe Riegelmechanismus 11 sowohl für die linke, als auch für die rechte vordere Eckrunge 2.

In Bezug auf die gegenseitige Anpassung des Hohlprofils 10 der Runge und des Riegels 15 ist von Bedeutung, dass das Hohlprofil 10 in Fahrtrichtung F eine Innenbreite B aufweist, und sich der erste Riegelabschnitt 31 nur auf der einen Hälfte dieser Innenbreite B, und der zweite Riegelabschnitt 32 nur auf der anderen Hälfte der Innenbreite B befindet.

Ein zweites Ausführungsbeispiel zeigt die Fig. 1 in Verbindung mit den Figuren 7 bis 11. Bei dieser Ausführungsform befindet sich der Riegelmechanismus 11 nicht in der Runge, hier einer lösbaren Mittelrunge 3 des Fahrzeugaufbaus, sondern in der Einfassung 7 der Bordwand. Zu diesem Zweck ist die Einfassung 7 als Hohlprofil 10 gestaltet, in welches der Riegelmechanismus in Längsrichtung eingesetzt und dann befestigt ist. Das Hohlprofil 10 ist mit einer Nut 40 versehen, in welcher die horizontale Lattung der jeweiligen Bordwand verankert ist. Im Übrigen ist die Gestaltung der Bordwandeinfassung 7 ähnlich dem für die vorderen Rungen 2 verwendeten Hohlprofil gemäß der ersten Ausführungsform.

Die Fig. 8 zeigt in zwei Alternativen, dass sich wiederum ein- und derselbe Riegelmechanismus 11 sowohl im Profil 10 der linken, als auch der rechten Bordwandeinfassung 7 montieren lässt. Der linke Bildteil zeigt das Hohlprofil der linken Bordwandeinfassung, der rechte Bildteil das Hohlprofil der rechten Bordwandeinfassung. Wiederum lässt sich ein- und derselbe Riegelmechanismus 11 sowohl in dem einen, wie auch in dem anderen Hohlprofil 10 befestigen. Bei Montage im linken Hohlprofil vermag nur der erste Riegelabschnitt 31, und bei Montage in dem rechten Hohlprofil nur der zweite Riegelabschnitt 32 in die jeweilige Ausnehmung 14 einzufahren, um so den korrespondierenden Bordwandhalter 12 formschlüssig zu fixieren. Der Bordwandhalter 12 ist bei dieser Ausführungsform, wie Fig. 7 zeigt, starr an der Runge 3 befestigt.

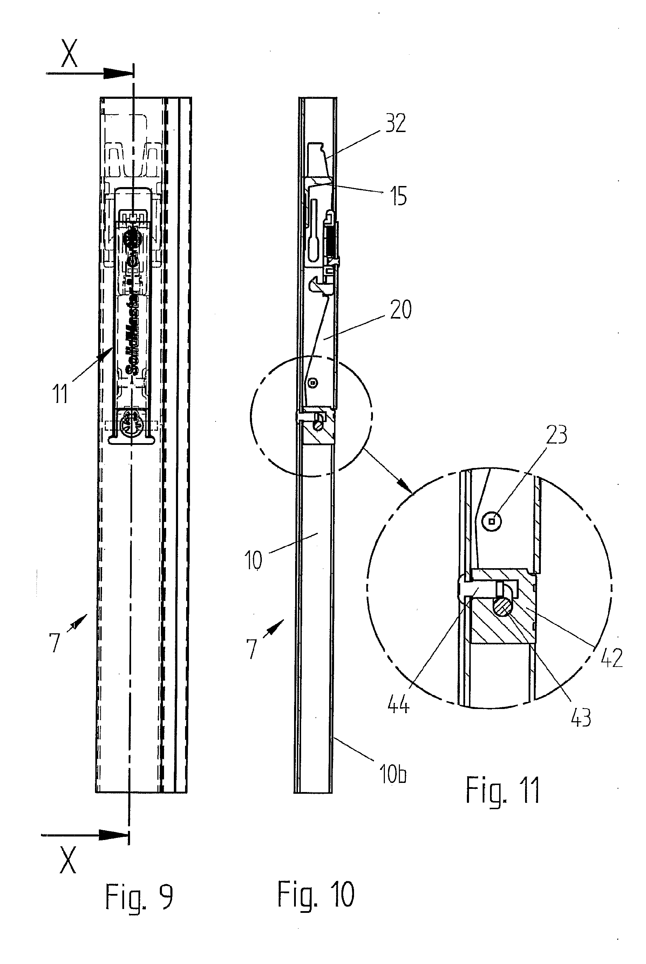

In den Figuren 9 bis 11 ist die Montage des Riegelmechanismus innen in dem Hohlprofil 10 der Bordwandeinfassung 7 dargestellt. Zum Riegelmechanismus gehört eine Konsole 42, die mittels einer Querachse 43 in dem Hohlprofil verstiftet ist. Die Querachse 43 ist zugleich jene Achse, um die der Schwenkhebel 20 verschwenkbar ist. Der zusätzlichen Lagesicherung dient ein Niet 44, welches durch eine Öffnung an der Rückseite des Hohlprofils 10 hindurch in die Konsole 42 greift und diese im Hohlprofil fixiert.

### Bezugszeichenliste

- 1: Ladeboden
- 2: Runge (vordere Eckrunge)
- 3: Runge (Mittelrunge)
- 4: Runge (hintere Eckrunge)
- 5: Bordwand
- 6: Scharnier
- 7: Bordwandeinfassung
- 7a: Bordwandeinfassung
- 10: Hohlprofil
- 10a: Wand des Hohlprofils
- 10b: Wand des Hohlprofils
- 11: Riegelmechanismus
- 12: Bordwandhalter
- 13: vordere Bordwand
- 14: Ausnehmung
- 15: Riegel
- 16: Öffnung
- 19: Grundplatte
- 20: Schwenkhebel
- 21: Achse
- 22: Kniehebel
- 23: Achse
- 24: Sicherungstaste
- 25: Gelenk
- 31: erster Riegelabschnitt
- 32: zweiter Riegelabschnitt
- 33: Längsmittelachse
- 34: Freiraum
- 36: Keilfläche
- 37: Keilfläche
- 40: Nut
- 42: Konsole
- 43: Querstift
- 44: Niet
- B: Innenbreite
- F: Fahrtrichtung
- L: Länge
- L1: Teillänge
- R: Bewegungsrichtung
- W: Winkel

## Patentansprüche

1. Bordwandverschluss an einem Nutzfahrzeugaufbau, mit einer vertikal an dem Aufbau angeordneten Runge (2, 3, 4), mindestens einer um eine horizontale Achse (6) nach unten abklappbaren Bordwand (5) mit einer im Schließzustand gegen die Runge (2, 3, 4) verriegelbaren Bordwandeinfassung (7, 7a), und einem in der Runge (2) oder der Bordwandeinfassung (7) angeordneten Riegelmechanismus (11) mit einem beweglich gelagerten Riegel (15), der formschlüssig mit einem an der Bordwandeinfassung (7) bzw. der Runge (2) angebrachten Bordwandhalter (12) verbindbar ist, **dadurch gekennzeichnet, dass** der Riegel (15) einen ersten (31) und einen zweiten (32) Riegelabschnitt aufweist, dass die beiden Riegelabschnitte (31, 32) bezüglich der Längsmittelachse (33) des Riegels (15) symmetrisch angeordnet und gestaltet sind, und dass im Schließzustand nur einer der beiden Riegelabschnitte (31, 32) in Formschluss mit dem Bordwandhalter (12) tritt.

2. Bordwandverschluss nach Anspruch 1, **dadurch gekennzeichnet, dass** der erste (31) und der zweite (32) Riegelabschnitt jeweils mit einer zur Bewegungsrichtung des Riegels (15) schräg angeordneten Keilfläche (36 bzw. 37) versehen sind, wobei beide Keilflächen (36, 37) in einer gemeinsamen Ebene liegen.

3. Bordwandverschluss nach Anspruch 1 oder 2, **dadurch gekennzeichnet, dass** der erste (31) und der zweite (32) Riegelabschnitt durch einen Freiraum (34) voneinander getrennt sind, der sich vom freien Riegelende ausgehend nur über eine Teillänge (L1) der Länge (L) des Riegels (15) erstreckt.

4. Bordwandverschluss nach Anspruch 1 oder 2, **dadurch gekennzeichnet, dass** sich die beiden Riegelabschnitte (31, 32) parallel zueinander in Bewegungsrichtung des Riegels (15) erstrecken.

5. Bordwandverschluss nach einem der Ansprüche 1 - 4, **dadurch gekennzeichnet, dass** die den Riegelmechanismus (11) aufnehmende Runge (2) bzw. Bordwandeinfassung (7) aus einem Hohlprofil (10) mit einer Innenbreite (B) in Fahrzeugrichtung besteht, und dass sich der erste Riegelabschnitt (31) ausschließlich auf der einen Hälfte der Innenbreite (B), und der zweite Riegelabschnitt (32) ausschließlich auf der anderen Hälfte der Innenbreite (B) befindet.

6. Bordwandverschluss nach Anspruch 5, **dadurch gekennzeichnet, dass** Bestandteil des Riegelmechanismus (11) ein mit dem Riegel (15) bewegungsgekoppelter, aus einer Öffnung (16) in der nach fahrzeugaußen weisenden Wand (10b) des Hohlprofils (10) herausschwenkbarer Schwenkhebel (20) ist, und dass der Riegelmechanismus (11) einschließlich eines Schwenkhebels (20) als eigenständige Baueinheit auf einer Grundplatte (19) montiert ist, die von innen her an der nach fahrzeugaußen weisenden Wand (10b) des Hohlprofils (10) befestigt ist.

7. Bordwandverschluss nach einem der vorangehenden Ansprüche, **dadurch gekennzeichnet, dass** sich der Bordwandhalter (12) bei hochgeklappter Bordwand (5) in einer Ausnehmung (14) der Runge (2) bzw. der Bordwandeinfassung (7) befindet, wobei sich die Ausnehmung (14) über Eck erstreckt, indem sie in etwa mittig auf einer nach fahrzeugaußen weisenden Wand (10b) beginnt und von dort bis in einen der Stirnfläche der Bordwand (5) gegenüberliegenden Wandabschnitt hinein reicht.

8. Bordwandverschluss nach Anspruch 7, **dadurch gekennzeichnet, dass** nur der aktive der beiden Riegelabschnitte (31, 32) in die Ausnehmung (14) einfahrbar ist.
